# EUROPÄISCHE PATENTANMELDUNG

(11) **EP 0 565 955 A1**
(43) Veröffentlichungstag der Anmeldung: **20.10.1993**
(21) Anmeldenummer: 93105365.6
(22) Anmeldetag: 31.03.1993
(51) Int. Cl.: B65D 47/06, F16L 23/028

(54) **Entnahmeverschluss für Flüssigkeitsbehälter**

(30) Priorität: 13.04.1992 DE 4212338
(71) Anmelder: MERCK PATENT GmbH, D-64271 Darmstadt (DE)
(72) Erfinder: Waldhaus, Willi, W-6100 Da-Arheilgen (DE); Schmelz, Michael, W-6239 Kriftel (DE); Benzinger, Martin, W-6070 Langen (DE)

(57) **Zusammenfassung**

Ein Entnahmeverschluß, der auf einen Behälterflansch (5) eines Flüssigkeitsbehälters (1) dichtend aufgesetzt ist, weist einen Flanschdeckel (2) und einstückig ausgeführte, nach außen ragende Anschlußstutzen (9) auf. Jeder Anschlußstutzen (9) wird von einem Kupplungsnippel (10) übergriffen. Ein Radial-Dichtring (11) am Anschlußstutzen (9) liegt an einer zylindrischen Dichtfläche (12) des Kupplungsnippels (11) an. Eine Brillenplatte (16) greift über einen äußeren Bund (13) am Kupplungsnippel (10) und preßt den Bund (13) gegen den Flanschdeckel (2). Die Dichtwirkung des Radial-Dichtrings (11) wird durch ein auf den Kupplungsnippel (10) aufgebrachtes Drehmoment nicht beeinträchtigt.

## Beschreibung

Die Erfindung betrifft einen Entnahmeverschluß für mit einem Behälterflansch an einer Behälteröffnung versehene Flüssigkeitsbehälter, mit einem Flanschdeckel, der mit nach außen ragenden Anschlußstutsen versehen ist und durch eine Brillenplatte, durch die die Anschlußstutzen ragen, mittels Flanschschrauben dichtend an den Behälterflansch anpreßbar ist, und mit Kupplungsnippeln, die jeweils mit dem zugeordneten Anschlußstutzen unter Zwischenlage eines Dichtrings verbunden sind.

Derartige Entnahmeverschlüsse werden vor allem für Flüssigkeitsbehälter eingesetzt, die zur Aufnahme von Flüssigkeiten höchster Reinheit dienen, insbesondere für die Halbleiterindustrie. Beim Transport, der Lagerung und der Handhabung solcher Flüssigkeitsbehälter müssen jegliche Verunreinigungen der Flüssigkeiten vermieden werden. Außerdem sind diese Flüssigkeiten in vielen Fällen giftig oder in anderer Weise schädlich, so daß mit hoher Sicherheit ein unbeabsichtigtes Austreten von Flüssigkeit verhindert werden muß. Die Entnahmeverschlüsse müssen daher so ausgeführt sein, daß auch bei nicht fachgerechter Handhabung ausgeschlossen ist, daß eine Undichtheit im Bereich des Entnahmeverschlusses auftritt.

Bei einem bekannten Entnahmeverschluß der eingangs genannten Gattung (EP-A-0 341 533) ist der Flanschdeckel mit den nach außen ragenden Anschlußstutzen einstückig aus Kunststoff ausgeführt. An den Anschlußstutzen ist ein Kupplungsnippel angesetzt, der mit einem äußeren Bund an der Stirnfläche des Anschlußstutzens anliegt. Eine Überwurfmutter ist auf den Anschlußstutzen geschraubt und greift über den Bund des Kupplungsnippels, um diesen gegen die Stirnseite des Anschlußstutzens zu drücken. Dazwischen ist ein axialer Dichtungsring eingelegt.

Die Dichtwirkung des Axial-Dichtungsrings hängt von der von der Überwurfmutter aufgebrachten axialen Anpreßkraft ab. Im Betrieb besteht aber die Gefahr, daß sich die Überwurfmutter lockert, insbesondere wenn beim Anschluß einer Kupplungsmuffe ein Drehmoment auf den Kupplungsnippel ausgeübt wird. Dies ist in besonderem Maße der Fall, wenn die Verbindung zwischen dem Kupplungsnippel und der anzubringenden Kupplungsmuffe eine Schraubverbindung ist. Aber auch bei der Verwendung von axial aufschiebbaren, einrastenden Kupplungsmuffen besteht die Gefahr, daß beim Herstellen oder Lösen der Verbindung ein Drehmoment auf den Kupplungsnippel ausgeübt wird, das sich auf die Überwurfmutter überträgt und diese lockert. Wenn die Überwurfmutter gelockert wird, läßt die Dichtwirkung des Axial-Dichtrings nach, so daß die Gefahr einer Undichtheit besteht.

Aufgabe der Erfindung ist es daher, einen Entnahmeverschluß der eingangs genannten Gattung so auszubilden, daß die Dichtwirkung zwischen dem Anschlußstutzen und dem Kupplungsnippel unter allen Betriebsbedingungen sicher erhalten bleibt, insbesondere auch dann, wenn auf den Kupplungsnippel Drehmomente aufgebracht werden.

Diese Aufgabe wird erfindungsgemäß dadurch gelöst, daß der Kupplungsnippel den Anschlußstutzen jeweils außen übergreift, daß der Dichtring ein an der Außenseite des Anschlußstutzens angeordneter Radialdichtring ist, der an einer zylindrischen Dichtfläche anliegt, und daß jeder Kupplungsnippel an seinem dem Flanschdeckel zugekehrten Ende einen äußeren Bund aufweist, der von der Brillenplatte übergriffen wird.

Durch die Verwendung eines Radialdichtrings wird erreicht, daß die Dichtwirkung nur durch die vorgegebenen, im Betrieb nicht veränderbaren Abmessungen der Konstruktion bestimmt wird und nicht von einer Schraubverbindung abhängt. Die mechanische Verbindung zwischen den Kupplungsnippeln und dem Flanschdeckel erfolgt nur durch die Brillenplatte, die von den Flanschschrauben gehalten wird. Für die Wirksamkeit der Dichtung zwischen dem Kupplungsnippel und dem jeweils zugeordneten Anschlußstutzen des Flanschdeckels ist es unerheblich, mit welcher Kraft die Flanschschrauben angezogen wurden bzw. ob sich die Brillenplatte mehr oder weniger stark verformt. Insbesondere beeinflußt eine im Betrieb möglicherweise auftretende axiale Verlagerung des Kupplungsnippels infolge eines Fließens des Kunststoffmaterials des Flanschdeckels die Dichtungswirkung nicht. Wenn es zu einer axialen Verlagerung zwischen dem Kupplungsnippel und dem Anschlußstutzen des Flanschdeckels kommt, tritt höchstens eine Relativbewegung zwischen dem Dichtring und der zylindrischen Dichtfläche ein, an der er anliegt. Da es sich aber um eine zylindrische Dichtfläche handelt, ist eine solche Relativbewegung ohne Einfluß auf den Anpreßdruck der Dichtung und damit auf die Dichtwirkung.

Ein besonderer Vorteil des Entnahmeverschlusses liegt noch darin, daß außer den ohnehin benötigten und üblicherweise besonders gesicherten Flanschschrauben keine weitere Verschraubung erforderlich ist, die eine besondere Sorgfalt bei der Montage und eine Sicherung im Betrieb erfordern würde. Eine die Sicherheit des Entnahmeverschlusses beeinträchtigende Manipulation ist im Betrieb daher weitestgehend ausgeschlossen.

Vorzugsweise ist das mit dem Bund versehene Ende des Kupplungsnippels in einer ringförmigen, den Anschlußstutzen umgebenden Nut des Flanschdeckels angeordnet und ragt über die Außenfläche des Flanschdeckels vor; die Brillenplatte preßt den Bund an den Flanschdeckel an. Da der Bund weitestgehend in der ringförmigen Nut angeordnet ist, braucht er nur wenig über die Außenfläche des Flanschdeckels vorragen. Die den Bund haltende Brillenplatte kann deshalb beim Anziehen der Flanschschrauben so verformt werden, daß sie an der Außenfläche des Flanschdeckels anliegt, um diesen am gesamten Umfang gegen den Behälterflansch zu drücken.

Zweckmäßigerweise verläuft von jeder ringförmigen Nut eine mindestens gleich tiefe Nut zum Rand des Flanschdeckels. Nach dem Befüllen oder der Flüssigkeitsentnahme kann die Außenseite des Entnahmeverschlusses durch Abspülen gereinigt werden, wobei die sich in den ringförmigen Nuten sammelnde Spülflüssigkeit durch die Nuten zum Rand des Flanschdeckels abfließen kann.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:

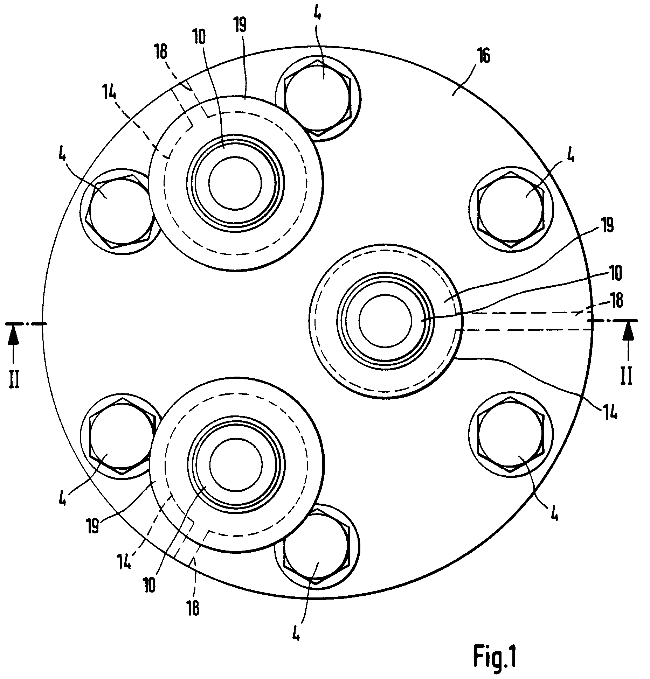

Fig. 1 eine Draufsicht auf einen Entnahmeverschluß für einen Flüssigkeitsbehälter und

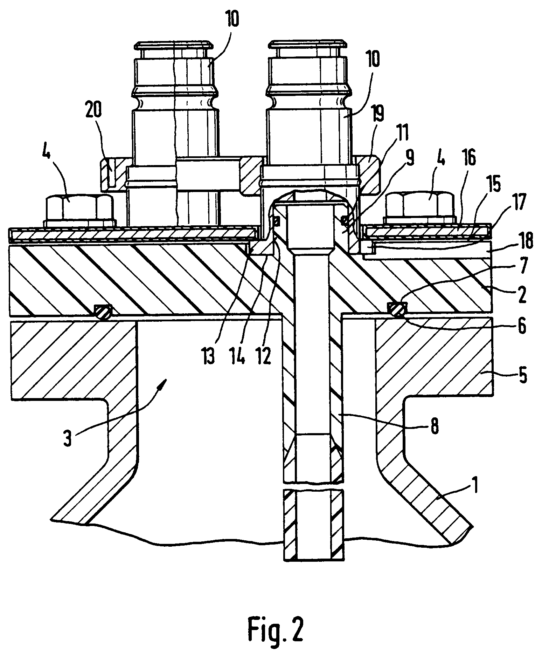

Fig. 2 einen Schnitt längs der Linie II-II in Fig. 1.

Der in der Zeichnung dargestellte Entnahmeverschluß für einen nur teilweise gezeigten Flüssigkeitsbehälter 1 weist einen beispielsweise aus Kunststoff, vorzugsweise TFM, bestehenden Flanschdeckel 2 auf, der eine obere Behälteröffnung 3 verschließt. Der Flanschdeckel 2 ist mittels Flanschschrauben 4 mit einem die Behälteröffnung 3 umgebenden Behälterflansch 5 verschraubt. Ein O-Ring 6 ist in eine Nut 7 an der Unterseite des Flanschdeckels 2 eingelegt und wird gegen die Oberseite des Behälterflansches 5 gedrückt, um eine Dichtung zwischen dem Behälterflansch 5 und dem Flanschdeckel 2 zu bewirken.

Der Flanschdeckel 2 ist vorzugsweise einstückig mit einem in den Flüssigkeitsbehälter 1 ragenden Tauchrohr 8 und mit drei nach außen ragenden Anschlußstutzen 9 verbunden. Die einstückige Ausführung des Flanschdeckels 2 mit den Anschlußstutzen 9 ermöglicht die Ausführung aus einem chemisch besonders widerstandsfähigen, aber nicht schweißbaren Kunstoff, wobei eine mechanische Verbindung, beispielsweise eine Schraubverbindung an dieser Stelle vermieden wird.

Jeder Anschlußstutzen 9 trägt einen Kupplungsnippel 10, der an der Außenseite des Flanschdeckels 2 nach oben ragt und zum Anschluß jeweils einer (nicht dargestellten) Kupplungsmuffe dient. Der Kupplungsnippel 10 und die zugehörige, axial aufschiebbare und einrastbare Kupplungsmuffe bilden eine Schnellkupplung zum Anschluß von Entnahmeleitungen zur Entnahme der Flüssigkeit aus dem Behälter 1 und von Begasungsleitungen zum Einblasen eines Gases bei der Flüssigkeitsentnahme bzw. zum Abziehen der Gasfüllung beim Befüllen des Flüssigkeitsbehälters 1.

Jeder Kupplungsnippel 10 greift an der Außenseite über den zugeordneten Anschlußstutzen 9. Ein beispielsweise als O-Ring 11 ausgeführter Dichtring ist in einer Nut an der Außenseite des Anschlußstutzens 9 angeordnet und bildet einen Radial-Dichtring, der an einer zylindrischen inneren Dichtfläche 12 des Kupplungsnippels 10 anliegt.

Jeder Kupplungsnippel 10 weist an seinem dem Flanschdeckel 2 zugekehrten Ende einen äußeren Bund 13 auf, der in einer den Verbindungsstutzen 9 umgebenden Nut 14 des Flanschdeckels 2 angeordnet ist und mit seiner Rückseite um ein geringes Maß über die Außenfläche 15 des Flanschdeckels 2 vorragt.

Eine Brillenplatte 16, die bei dem dargestellten Ausführungsbeispiel als kunststoffbeschichtete Stahlplatte ausgeführt ist, weist den gleichen Durchmesser auf wie der Flanschdeckel 2 und ist an der dem Behälterflansch 5 abgekehrten Seite des Flanschdeckels 2 angeordnet. Die Brillenplatte 16 weist Bohrungen für jede der Flanschschrauben 4 und drei Bohrungen für den Durchtritt der Anschlußstutzen 9 einschließlich der Kupplungsnippel 10 auf. Die Brillenplatte 16 übergreift den äußeren Bund 13 aller Kupplungsnippel 10. Beim Anziehen der Flanschschrauben 4 preßt die Brillenplatte 16 den Bund 13 gegen den Nutgrund der Nut 14 des Flanschdeckels 2.

Der Abstand zwischen der Brillenplatte 16 und dem Flanschdeckel 2 wird vorzugsweise so gering gewählt, daß sich der äußere Rand der Brillenplatte 16 beim Anziehen der Flanschschrauben 4 so verformt, daß die Brillenplatte 16 zumindest im Bereich der Flanschschrauben 4 zur Anlage an der Oberseite des Flanschdeckels 2 kommt. Die mit dem Behälterflansch 5 verbundenen Flanschschrauben 4 bewirken somit nicht nur die abgedichtete Verbindung des Flanschdeckels 2 mit dem Behälterflansch 5, sondern auch die Befestigung der Kupplungsnippel 10 an dem Flanschdeckel 2. Die Dichtwirkung des Radial-Dichtrings 11, der an der zylindrischen Dichtfläche 12 anliegt, bleibt auch bei einer axialen Relativverschiebung zwischen dem Kupplungsnippel 10 und dem Flanschdeckel 2 erhalten.

Der Bund 13 des Kupplungsnippels 10 weist an mindestens einer Stelle seines Umfangs eine Aussparung 17 auf. Vorzugsweise sind aber mehrere solcher Aussparungen 17 am Umfang des Bundes 13 verteilt angeordnet. Von jeder ringförmigen Nut 14 verläuft eine mindestens gleich tiefe Nut 18 zum Rand des Flanschdeckels 2. Wenn die Außenseite des Entnahmeverschlusses nach dem Befüllen oder Entleeren durch Abspülen gesäubert wird, kann die gesamte spülflüssigkeit, die sich im Bereich des Bundes 13 sammelt, durch die Aussparungen 17, die Nut 14 und die Nut 18 nach außen abfließen.

Jeder Kupplungsnippel 10 trägt einen drehbaren Codierring 19, der durch eine Rastverbindung auf dem Kupplungsnippel 10 axial festgelegt ist. Der Cordierring 19 ist mit einer mechanisch wirkenden Codierausnehmung 20 versehen, beispielsweise einer axial geöffneten Nut, wobei jeder Codierring 19 der drei Kupplungsnippel 10 eine Nut 20 mit unterschiedlichem Durchmesser aufweist. An der anzuschließenden Kupplungsmuffe ist ein axialer Vorsprung von gleichem Durchmesser angebracht. Damit ist sichergestellt, daß nur die jeweils zugeordnete Kupplungsmuffe ausreichend weit axial aufgeschoben werden kann, um am Kupplungsnippel 10 einzurasten. Damit werden Verwechslungen der Anschlüsse ausgeschlossen. Durch die Farbgebung der Codierringe 19 und entsprechende Farbmarkierungen an den Kupplungsmuffen wird eine zusätzliche optische Unterscheidungsmöglichkeit gegeben. Durch zusätzliche Vorsprünge bzw. Ausnehmungen an den Codierringen 20 ist die Möglichkeit gegeben, die Behälteranschlüsse durch eine zusätzliche mechanische Verschlüsselung auch chemikalienspezifisch zu codieren.

Insbesondere bei der Verwendung solcher mechanischer Codierungseinrichtungen wird beim Anschließen der Kupplungsmuffen ein Drehmoment auf die Kupplungsnippel 10 ausgeübt. Da die Verbindung zwischen den Kupplungsnippeln 10 und den Anschlußstutzen 9 des Flanschdeckels 2 aber keine Schraubverbindung ist und da die Dichtwirkung des Radial-Dichtrings 11 nicht von dem Anpreßdruck einer Schraubverbindung abhängt, besteht keine Gefahr, daß durch ein solches Drehmoment eine Beeinträchtigung der Dichtwirkung zwischen dem Anschlußnippel 10 und dem Flanschdeckel 2 eintritt.

## Patentansprüche

1. Entnahmeverschluß für mit einem Behälterflansch an einer Behälteröffnung versehene Flüssigkeitsbehälter, mit einem Flanschdeckel, der mit nach außen ragenden Anschlußstutzen versehen ist und durch eine Brillenplatte, durch die die Anschlußstutzen ragen, mittels Flanschschrauben dichtend an den Behälterflansch anpreßbar ist, und mit Kupplungsnippeln, die jeweils mit dem zugeordneten Anschlußstutzen unter Zwischenlage eines Dichtrings verbunden sind, dadurch gekennzeichnet, daß der Kupplungsnippel (10) den Anschlußstutzen (9) jeweils außen übergreift, daß der Dichtring ein an der Außenseite des Anschlußstutzens (9) angeordneter Radial-Dichtring (11) ist, der an einer zylindrischen Dichtfläche (12) anliegt, und daS jeder Kupplungsnippel (10) an seinem dem Flanschdeckel (2) zugekehrten Ende einen äußeren Bund (13) aufweist, der von der Brillenplatte (16) übergriffen wird.

2. Entnahmeverschluß nach Anschluß 1, dadurch gekennzeichnet, daS das mit dem Bund (13) versehene Ende des Kupplungsnippels (10) in einer ringförmigen, den Anschlußstutzen (9) umgebenden Nut (14) des Flanschdeckels (2) angeordnet ist und über die Außenfläche (15) des Flanschdeckels (2) vorragt und daß die Brillenplatte (16) den Bund (13) an den Flanschdeckel (2) anpreßt.

3. Entnahmeverschluß nach Anspruch 2, dadurch gekennzeichnet, daß von jeder ringförmigen Nut (14) eine mindestens gleich tiefe Nut (18) zum Rand des Flanschdeckels (2) verläuft.

4. Entnahmeverschluß nach Anspruch 1, dadurch gekennzeichnet, daß der Bund (13) an mindestens einer Stelle seines Umfangs eine Aussparung (17) aufweist.

5. Entnahmeverschluß nach Anschluß 1, dadurch gekennzeichnet, daß der Flanschdeckel (2) mindestens angenähert den gleichen Durchmesser aufweist wie die Brillenplatte (16).

6. Entnahmeverschluß nach Anspruch 1, dadurch gekennzeichnet, daß jeder Kupplungsnippel (10) mit einer axial aufschiebbaren Kupplungsmuffe verbindbar ist und einen drehbaren Codierring (19) mit mindestens einer mechanisch wirkenden Codierausnehmung (20) trägt.

7. Entnahmeverschluß nach Anspruch 6, dadurch gekennzeichnet, daß der Codierring (19) mittels einer Rastverbindung mit dem Kupplungsnippel (10) verbunden ist.

8. Entnahmeverschluß nach Anschluß 1, dadurch gekennzeichnet, daß die Brillenplatte (16) eine kunststoffbeschichtete Stahlplatte ist.

9. Entnahmeverschluß nach Anspruch 1, dadurch gekennzeichnet, daß der Radial-Dichtring (11) ein O-Ring ist.
